# EUROPEAN PATENT APPLICATION

(11) **EP 4 799 714 A1**
(43) Date of publication of application: **02.09.2026**
(21) Application number: 24882073.0
(22) Date of filing: 19.09.2024
(51) Int. Cl.: B01D 53/14, B01D 53/62, B01D 53/82

(54) **ACIDIC GAS ADSORPTION DEVICE**

(30) Priority: 26.10.2023 JP 2023183668
(71) Applicant: NGK Corporation, Nagoya-shi, Aichi 467-8530 (JP)
(72) Inventor: OKUMA, Yusuke, Nagoya-shi, Aichi 467-8530 (JP); ANDO, Junichi, Nagoya-shi, Aichi 467-8530 (JP); TAKAHASHI, Michio, Nagoya-shi, Aichi 467-8530 (JP); KAN, Hirofumi, Nagoya-shi, Aichi 467-8530 (JP)
(74) Representative: MERH-IP Matias Erny Reichl Hoffmann Patentanwälte PartG mbB
(86) International application number: PCT/JP2024/033415
(87) International publication number: WO 2025/088956

(57) **Abstract**

Provided is an acid gas adsorption device capable of inhibiting the outflow of an acid gas adsorption material. An acid gas adsorption device according to an embodiment of the present disclosure includes an acid gas adsorption part and an adsorption material outflow inhibition part. The acid gas adsorption part includes an acid gas adsorption material capable of adsorbing an acid gas. The acid gas adsorption part allows passage of a fluid. The adsorption material outflow inhibition part is positioned on a downstream side of the acid gas adsorption part in a direction of passage of the fluid. The adsorption material outflow inhibition part includes an outflow inhibitor. An absolute value of a difference between a Hildebrand solubility parameter of the acid gas adsorption material and a Hildebrand solubility parameter of the outflow inhibitor is 1.0 (cal/cm³)^{1/2} or more at 25°C.

## Description

### Technical Field

The present disclosure relates to an acid gas adsorption device.

### Background Art

In recent years, an attempt has been made to separate and capture an acid gas in the atmosphere in order to reduce an environmental load. Such acid gas is, for example, carbon dioxide (hereinafter sometimes referred to as "CO₂"), which is a main cause of global warming. As a typical example of such attempt, a Carbon dioxide Capture, Utilization and Storage (CCUS) cycle has been known.

As a carbon dioxide adsorption device to be used for such separation and capture of carbon dioxide, there has been proposed a gas separation unit including a carbon dioxide adsorption part having a pellet structure (see, for example, Patent Literature 1). In the carbon dioxide adsorption device, a carbon dioxide adsorption material included in the carbon dioxide adsorption part adsorbs CO₂ at a predetermined adsorption temperature and desorbs CO₂ at a desorption temperature exceeding the adsorption temperature.

### Citation List

### Patent Literature

[PTL 1] WO 2014/170184 A1

### Summary of Invention

### Technical Problem

In the carbon dioxide adsorption device described in Patent Literature 1, it has been investigated that a desorption gas heated to the desorption temperature is caused to pass through the carbon dioxide adsorption part to capture CO₂ together with the desorption gas. In such method of capturing CO₂, thermal energy is transferred from the passing desorption gas to the carbon dioxide adsorption part, and hence the temperature of the carbon dioxide adsorption part may decrease toward a downstream side in a direction of passage of the desorption gas. In this case, there is a risk in that, in a downstream side portion of the carbon dioxide adsorption part, a condensable component (typically water) included in the desorption gas may be aggregated and liquefied, and the carbon dioxide adsorption material may be dissolved and/or dispersed in the liquid. Then, there is a problem in that the liquid containing the carbon dioxide adsorption material flows out of the carbon dioxide adsorption device along with the desorption gas.

A primary object of the present disclosure is to provide an acid gas adsorption device capable of inhibiting the outflow of an acid gas adsorption material.

### Solution to Problem

[1] According to an embodiment of the present disclosure, there is provided an acid gas adsorption device including an acid gas adsorption part and an adsorption material outflow inhibition part. The acid gas adsorption part includes an acid gas adsorption material capable of adsorbing an acid gas. The acid gas adsorption part allows passage of a fluid. The adsorption material outflow inhibition part is positioned on a downstream side of the acid gas adsorption part in a direction of passage of the fluid. The adsorption material outflow inhibition part includes an outflow inhibitor. An absolute value of a difference between a Hildebrand solubility parameter of the acid gas adsorption material and a Hildebrand solubility parameter of the outflow inhibitor is 1.0 (cal/cm³)^{1/2} or more at 25°C.
[2] In the acid gas adsorption device according to the above-mentioned item [1], the acid gas may be carbon dioxide.
[3] In the acid gas adsorption device according to the above-mentioned item [1] or [2], the outflow inhibitor may have a solubility in water at 25°C of 0.1 g/100 g-H₂O or less.

### Advantageous Effects of Invention

According to the embodiments of the present disclosure, the acid gas adsorption device capable of inhibiting the outflow of an acid gas adsorption material can be achieved.

### Brief Description of Drawings

FIG. **1** is a schematic configuration view of an acid gas adsorption device according to one embodiment of the present disclosure.
FIG. **2** is a schematic configuration view of an acid gas adsorption device according to another embodiment of the present disclosure.
FIG. **3** is a schematic configuration view of an acid gas adsorption device according to still another embodiment of the present disclosure.
FIG. **4** is a schematic configuration view of a first adsorption block included in the acid gas adsorption device of FIG. **3**.
FIG. **5** is a schematic perspective view of the first adsorption block according to another embodiment.
FIG. **6** is a schematic sectional view of the first adsorption block of FIG. **5**.
FIG. **7** is a schematic sectional view of an inhibition block included in the acid gas adsorption device of FIG. **3**.

### Description of Embodiments

Embodiments of the present disclosure are described below with reference to the drawings. However, the present disclosure is not limited to these embodiments. For clearer illustration, some widths, thicknesses, shapes, and the like of respective portions may be schematically illustrated in the drawings in comparison to the embodiments. However, the widths, the thicknesses, the shapes, and the like are merely an example, and do not limit understanding of the present disclosure.

### A. Overview of Acid Gas Adsorption Device

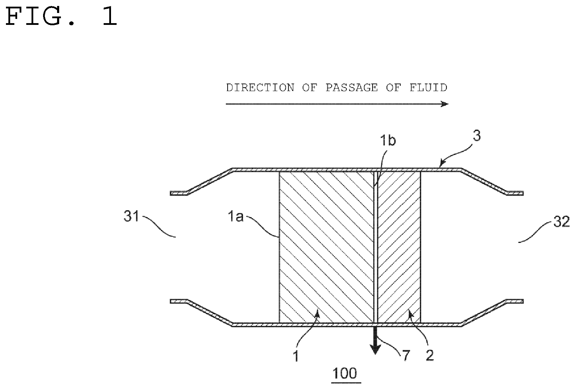

FIG. **1** is a schematic configuration view of an acid gas adsorption device according to one embodiment of the present disclosure.

An acid gas adsorption device **100** in the illustrated example includes an acid gas adsorption part **1** and an adsorption material outflow inhibition part **2**. The acid gas adsorption part **1** includes an acid gas adsorption material capable of adsorbing an acid gas. The acid gas adsorption part **1** allows passage of a fluid. The adsorption material outflow inhibition part **2** is positioned on a downstream side of the acid gas adsorption part **1** in a direction of passage of the fluid. The adsorption material outflow inhibition part **2** includes an outflow inhibitor. An absolute value of a difference between a Hildebrand solubility parameter of the acid gas adsorption material and a Hildebrand solubility parameter of the outflow inhibitor (hereinafter referred to as "SP value difference" between the acid gas adsorption material and the outflow inhibitor) is 1.0 (cal/cm³)^{1/2} or more at 25°C.

The acid gas adsorption material included in the acid gas adsorption part is identified, for example, by mass spectrometry, gas chromatography, liquid chromatography, nuclear magnetic resonance spectroscopy, or infrared spectroscopy. When the acid gas adsorption part includes a plurality of kinds of acid gas adsorption materials, the Hildebrand solubility parameter (hereinafter referred to as "SP value") of the acid gas adsorption materials included in the acid gas adsorption part is calculated as a summed value of products of a volume ratio and an SP value of each of the acid gas adsorption materials.

More specifically, first, a sample having a cylindrical shape is collected from a portion of the acid gas adsorption part that includes the acid gas adsorption materials (typically, an acid gas adsorption material layer described later, a pellet-like adsorption material described later). Then, element mapping images at the following nine positions in the sample are acquired, for example, with an electron probe micro analyzer (EPMA) capable of detecting light elements such as nitrogen at a magnification of 300 times.

First position: a center of one end surface of the sample, second position: an end portion of the one end surface, third position: a midpoint of a line segment connecting the first position and the second position, fourth position: a center of a cut surface obtained by cutting a center of the sample in a length direction in a direction orthogonal to the length direction, fifth position: an end portion of the cut surface; sixth position: a midpoint of a line segment connecting the fourth position and the fifth position, seventh position: a center of another end surface of the sample, eighth position: an end portion of another end surface, ninth position: a midpoint of a line segment connecting the seventh position and the eighth position.

Then, area ratios (element ratios) of the plurality of acid gas adsorption materials are determined from each of the element mapping images at the first position to the ninth position. After that, an average value of the obtained plurality of area ratios (element ratios) is calculated. Then, a volume percent (Vol%) of each of the acid gas adsorption materials with respect to a total volume of the plurality of acid gas adsorption materials of 100 Vol% is calculated from the average value of the area ratios (element ratios) of the plurality of acid gas adsorption materials.

Subsequently, products of a volume ratio and an SP value of each of the acid gas adsorption materials are summed. For example, when the acid gas adsorption part includes a first acid gas adsorption material A (SP value: 15, volume percent: 70 Vol%) and a second acid gas adsorption material B (SP value: 10, volume percent: 30 Vol%), the SP value of the acid gas adsorption materials included in the acid gas adsorption part is calculated as 13.5 (cal/cm³)^{1/2} by the following equation (1).$\left(15\times 70/100\right) + \left(10\times 30/100\right) = 13.5$

In addition, the outflow inhibitor included in the adsorption material outflow inhibition part is identified, for example, by mass spectrometry, gas chromatography, liquid chromatography, nuclear magnetic resonance spectroscopy, or infrared spectroscopy. When the adsorption material outflow inhibition part includes a plurality of kinds of outflow inhibitors, the SP value of the outflow inhibitors is calculated in the same manner as in the SP value of the acid gas adsorption materials described above except that a sample is collected from a portion of the adsorption material outflow inhibition part that includes the outflow inhibitors (typically, an outflow inhibitor layer described later).

According to one embodiment of the present disclosure, the adsorption material outflow inhibition part positioned on the downstream side of the acid gas adsorption part includes the outflow inhibitor having the SP value difference from the acid gas adsorption material as described above. Thus, even when a liquid is generated in a downstream portion of the acid gas adsorption part and the acid gas adsorption material is dissolved and/or dispersed in the liquid, it is possible to inhibit passage of a liquid containing the acid gas adsorption material (hereinafter referred to as "adsorption material-containing liquid") through the adsorption material outflow inhibition part and the outflow thereof from the acid gas adsorption device. As a result, unintentional discharge of the acid gas adsorption material from the acid gas adsorption device can be inhibited. In one embodiment, even when a substance harmful to the human body is employed as the acid gas adsorption material, the outflow of the acid gas adsorption material from the acid gas adsorption device is inhibited, and hence the safety of the acid gas adsorption device can be improved and an environmental load can be reduced.

The SP value difference between the acid gas adsorption material and the outflow inhibitor at 25°C is preferably 1.5 (cal/cm³)^{1/2} or more. When the acid gas adsorption material and the outflow inhibitor have such SP value difference, the passage of the adsorption material-containing liquid through the adsorption material outflow inhibition part can be stably inhibited.

Meanwhile, the SP value difference between the acid gas adsorption material and the outflow inhibitor at 25°C is, for example, 12 (cal/cm³)^{1/2} or less, preferably 8 (cal/cm³)^{1/2} or less, more preferably 5 (cal/cm³)^{1/2} or less, still more preferably 3 (cal/cm³)^{1/2} or less. When the acid gas adsorption material and the outflow inhibitor have such SP value difference, the outflow inhibitor can be dissolved and the adsorption material outflow inhibition part can be stably formed. In particular, when the adsorption material outflow inhibition part includes an outflow inhibitor layer described later, an outflow inhibitor layer having a sufficient thickness can be stably formed.

At 25°C, the SP value of the acid gas adsorption material may be more than the SP value of the outflow inhibitor or may be less than the SP value of the outflow inhibitor. In one embodiment, the SP value of the acid gas adsorption material exceeds the SP value of the outflow inhibitor.

The SP value of the acid gas adsorption material at 25°C is, for example, from 10.0 (cal/cm³)^{1/2} to 18.0 (cal/cm³)^{1/2}, preferably from 11.0 (cal/cm³)^{1/2} to 17.0 (cal/cm³)^{1/2}, more preferably from 11.9 (cal/cm³)^{1/2} to 14.5 (cal/cm³)^{1/2}.

The SP value is calculated, for example, by the Fedors method described in "Polymer Engineering and Science, February, 1974, Vol. 14, No. 2, Page 147-154" based on information from functional groups detected by structural analysis such as infrared spectroscopy or Raman spectroscopy.

The SP value of the outflow inhibitor at 25°C is, for example, from 5.0 (cal/cm³)^{1/2} to 13.4 (cal/cm³)^{1/2}, preferably from 6.2 (cal/cm³)^{1/2} to 10.4 (cal/cm³)^{1/2}, more preferably from 8.0 (cal/cm³)^{1/2} to 10.4 (cal/cm³)^{1/2}.

Any appropriate acid gas adsorption material may be selected in accordance with the acid gas to be adsorbed by the acid gas adsorption device.

Examples of the acid gas include carbon dioxide (CO₂), hydrogen sulfide, sulfur dioxide, nitrogen dioxide, dimethyl sulfide (DMS), and hydrogen chloride. In one embodiment, the acid gas is carbon dioxide (CO₂), and the gas to be treated as a fluid is a CO₂-containing gas. The CO₂-containing gas may also contain nitrogen in addition to CO₂. The CO₂-containing gas is typically air (atmosphere). A case in which the acid gas is carbon dioxide (CO₂) is described in detail below.

When the acid gas is CO₂, the acid gas adsorption material is a carbon dioxide adsorption material.

As the carbon dioxide adsorption material, any appropriate compound capable of adsorbing and desorbing CO₂ may be adopted. An example of the carbon dioxide adsorption material is a nitrogen-containing compound.

More specific examples of the nitrogen-containing compound include: primary amines, such as monoethanolamine and polyvinylamine; secondary amines, such as diethanolamine, a cyclic amine, and N-(3-aminopropyl)diethanolamine; tertiary amines, such as methyldiethylamine and triethanolamine; ethyleneamine compounds such as tetraethylenepentamine; aminosilane coupling agents, such as aminopropyltrimethoxysilane, 3-aminopropyltriethoxysilane, N-(2-aminoethyl)-3-aminopropyl trimethoxysilane, and polyethylenimine trimethoxysilane; organic monomers each having a primary amino group to tertiary amino group, such as ethyleneimine and styrene having an amino group; organic polymers each having a primary amino group to a tertiary amino group, such as linear polyethylenimine, branched polyethylenimine having a primary amino group to tertiary amino group, polyamideamine, and polyvinylamine; piperazine compounds, such as piperazine and 1-(2-hydroxyethyl)piperazine; and organic/inorganic compounds each having added thereto an amino group as a substituent.

Of the carbon dioxide adsorption materials, methyldiethylamine, monoethanolamine, a cyclic amine, diethanolamine, tetraethylenepentamine, ethyleneimine, linear polyethylenimine, branched polyethylenimine, an organic/inorganic compound having added thereto an amino group as a substituent, and piperazine are preferred, and linear polyethylenimine, branched polyethylenimine, and piperazine are more preferred.

Such carbon dioxide adsorption materials may be used alone or in combination thereof.

Any appropriate outflow inhibitor may be selected in accordance with the acid gas adsorption material (carbon dioxide adsorption material) so that the SP value difference falls within the above-mentioned ranges. The outflow inhibitor may have acid gas adsorption capacity or may have substantially no acid gas adsorption capacity.

Examples of the outflow inhibitor include organic binders. Those outflow inhibitors may be used alone or in combination thereof.

The organic binder typically has no acid gas adsorption capacity.

Examples of the organic binder include: fluoropolymers, such as polyvinylidene fluoride (PVDF), polytetrafluoroethylene (PTFE), perfluoroalkoxyalkane (PFA), perfluoroethylene propylene copolymer (FEP), ethylene tetrafluoroethylene copolymer (ETFE), and polyvinyl fluoride (PVF); and amorphous plastics, such as polyether sulfone (PES), polysulfone, polyvinylidene chloride, polyimide, and polyvinyl chloride. The organic binders may be used alone or in combination thereof.

A weight-average molecular weight Mw (in terms of polystyrene) of the organic binder is, for example, 10,000 or more, preferably 200,000 or more, and is, for example, 10,000,000 or less, preferably 1,000,000 or less.

A plastic and a resin each containing a nitrogen atom each typically have acid gas adsorption capacity. An example of the plastic and the resin each containing a nitrogen atom is an ion exchange resin having added thereto an amino group. The plastics and the resins each containing a nitrogen atom may be used alone or in combination thereof.

Of such outflow inhibitors, an organic binder is preferred, a fluoropolymer is more preferred, and PVF and PVDF are still more preferred.

The solubility of the outflow inhibitor (typically an organic binder) in water at 25°C is, for example, 0.1 g/100 g-H₂O or less, preferably 0.05 g/100 g-H₂O or less. The lower limit of the solubility of the outflow inhibitor in water at 25°C is typically 0.01 g/100 g-H₂O or more. When the solubility of the outflow inhibitor in water at 25°C falls within such ranges, even when water is generated in the downstream portion of the acid gas adsorption part and the acid gas adsorption material is dissolved therein, the outflow of the aqueous solution of the acid gas adsorption material through the adsorption material outflow inhibition part and out of the acid gas adsorption device can be stably inhibited. The solubility in water is measured, for example, by immersing an object in water at 25°C for 3 hours and measuring a change in mass caused by dissolution.

The specific configuration of the acid gas adsorption device is described below.

### B. Acid Gas Adsorption Part

The acid gas adsorption part **1** typically includes an upstream end surface **1a** and a downstream end surface **1b** in the direction of passage of the fluid. The direction of passage of the fluid is typically orthogonal to each of the upstream end surface **1a** and the downstream end surface **1b** of the acid gas adsorption part **1**.

The dimension of the acid gas adsorption part **1** in the direction of passage of the fluid is not particularly limited, and is, for example, from 0.5 m to 2.0 m, preferably from 0.6 m to 1.0 m. The dimension of the acid gas adsorption part **1** in a direction orthogonal to the direction of passage of the fluid is not particularly limited, and is, for example, from 0.5 m to 4.0 m, preferably from 1.0 m to 2.0 mm.

The acid gas adsorption part **1** may be divided into a plurality of portions in the direction of passage of the fluid, and may also be divided into a plurality of blocks in a direction intersecting (typically orthogonal to) the direction of passage of the fluid.

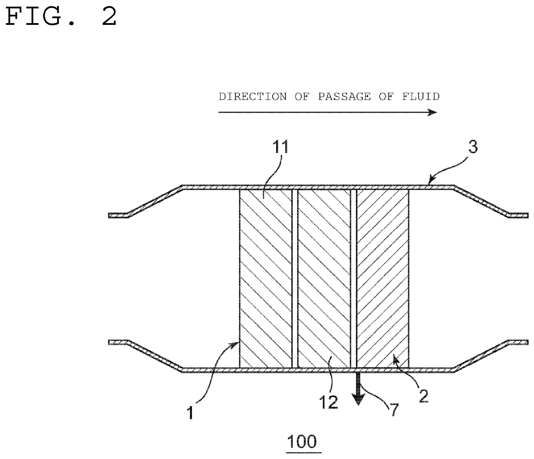

As illustrated in FIG. **2**, in one embodiment, the acid gas adsorption part **1** is divided into a plurality of portions in the direction of passage of the fluid. The acid gas adsorption part **1** may be formed of a plurality of adsorption portions. The plurality of adsorption portions include a first adsorption portion to an n-th adsorption portion. The number "n" represents an integer of, for example, from 2 to 20.

In the illustrated example, the acid gas adsorption part **1** is divided into a first adsorption portion **11** and a second adsorption portion **12** in the direction of passage of the fluid. The first adsorption portion **11** and the second adsorption portion **12** are configured as separate bodies.

The fluid supplied to the acid gas adsorption device may contain poisoning and degradation components that deteriorate the acid gas adsorption material. The fluid passes through the first adsorption portion and the second adsorption portion in the stated order. Thus, the poisoning and degradation components included in the fluid adhere to the first adsorption portion relatively easily, and the acid gas adsorption material included in the first adsorption portion is more liable to deteriorate than the acid gas adsorption material included in the second adsorption portion. As a result, the life of the first adsorption portion may be shorter than that of the second adsorption portion. According to one embodiment, the first adsorption portion having a relatively short life and the second adsorption portion having a relatively long life are separated from each other, and hence the first adsorption portion and the second adsorption portion can be separately replaced in accordance with their respective lives. Thus, the acid gas adsorption part can be partially and smoothly replaced as compared to the case in which the entire acid gas adsorption part is replaced. As a result, the time required for replacing the acid gas adsorption part can be reduced, and hence the downtime of the acid gas adsorption device can be shortened. In addition, the first adsorption portion and the second adsorption portion can be replaced at an appropriate timing in accordance with their respective lives, and hence running costs (specifically, the cost of preparing a new adsorption portion and the cost of disposing of the used adsorption portion) can be reduced.

The dimensions of the first adsorption portion **11** and the second adsorption portion **12** in the direction of passage of the fluid may be adjusted to any appropriate dimensions in accordance with the acid gas adsorption materials used therefor, respectively.

A gap may be formed in the direction of passage of the fluid between the adsorption portions adjacent to each other among the plurality of adsorption portions (between the first adsorption portion and the second adsorption portion in the illustrated example). In general, a fluid flows more easily in the vicinity of the center and flows less easily in the outer portions of an acid gas adsorption part. In this regard, when a gap is formed between the adsorption portions adjacent to each other, the variation in flow rate of the fluid in the acid gas adsorption part can be reduced. In the direction of passage of the fluid, the dimension of the gap is, for example, 30% or less, preferably 10% or less with respect to the full length of the acid gas adsorption part (sum of the dimensions of the plurality of adsorption portions in the illustrated example) in the direction of passage of the fluid. When the dimension of the gap is adjusted in this manner, fluid stagnation between the adsorption portions adjacent to each other can be suppressed, and the fluid is allowed to pass smoothly even through the divided acid gas adsorption part.

In addition, all of the plurality of adsorption portions may include the same acid gas adsorption material, or some of the plurality of adsorption portions may include different acid gas adsorption materials. That is, the first adsorption portion **11** and the second adsorption portion **12** may include the same acid gas adsorption materials as each other, or may include acid gas adsorption materials different from each other.

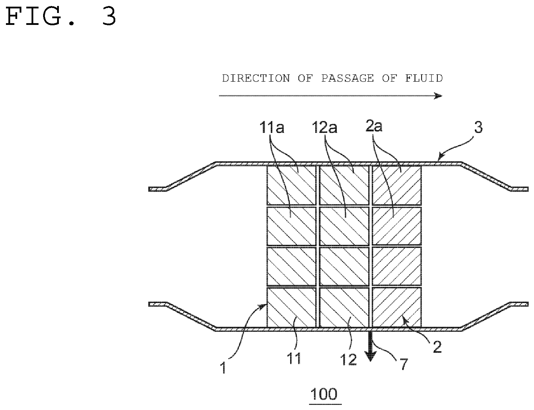

As illustrated in FIG. **3**, each of the plurality of adsorption portions may be divided into a plurality of blocks in a direction intersecting (typically orthogonal to) the direction of passage of the fluid. In the illustrated example, each of the first adsorption portion **11** and the second adsorption portion **12** is divided into a plurality of blocks in the direction orthogonal to the direction of passage of the fluid. The first adsorption portion **11** is formed of a plurality of first adsorption blocks **11a**. Thus, first adsorption blocks, each being relatively small, can be produced to form the first adsorption portion. Accordingly, the first adsorption portion can be smoothly produced, and a portion of the first adsorption portion that is particularly liable to deteriorate (first adsorption block) can be separately replaced.

The size of the first adsorption block **11a** may be adjusted to any appropriate size. The dimension of the first adsorption block **11a** in the direction of passage of the fluid is, for example, from 0.10 m to 0.30 m, preferably from 0.15 m to 0.20 m. The dimension of the first adsorption block **11a** in the direction orthogonal to the direction of passage of the fluid is, for example, from 0.10 m to 0.80 m, preferably from 0.15 m to 0.60 m.

In the illustrated example, the first adsorption portion **11** is divided into four blocks in a first orthogonal direction (up-and-down direction on the drawing sheet) orthogonal to the direction of passage of the fluid. The number of divisions of the first adsorption portion in the first orthogonal direction is not limited to the number described above. Further, the first adsorption portion **11** may also be divided into a plurality of blocks in a second orthogonal direction (depth direction on the drawing sheet) orthogonal to the direction of passage of the fluid and the first orthogonal direction. The number of divisions of the first adsorption portion in the direction orthogonal to the direction of passage of the fluid is, for example, 2 or more and 300 or less.

Adjacent first adsorption blocks **11a** among the plurality of first adsorption blocks **11a** may define a gap therebetween or may be in contact with each other in the direction orthogonal to the direction of passage of the fluid.

Further, all the plurality of first adsorption blocks **11a** may include the same acid gas adsorption material, or some of the plurality of first adsorption blocks **11a** may include a different acid gas adsorption material.

In addition, the second adsorption portion **12** is formed of a plurality of second adsorption blocks **12a**. The second adsorption portion **12** formed of such plurality of second adsorption blocks **12a** is described in the same manner as in the first adsorption portion **11** formed of the plurality of first adsorption blocks **11a** described above.

### B-1. Details of Adsorption Block (Acid Gas Adsorption Part)

The acid gas adsorption part illustrated in FIG. **1** (integrally formed), the adsorption portion illustrated in FIG. **2**, and the adsorption block illustrated in FIG. **3** have the same configuration except for a difference in size. Thus, the configuration of the first adsorption block **11a** illustrated in FIG. **3** is described in detail below.

### B-1-1. Adsorption Block including Pellet-like Adsorption Material (Acid Gas Adsorption Part)

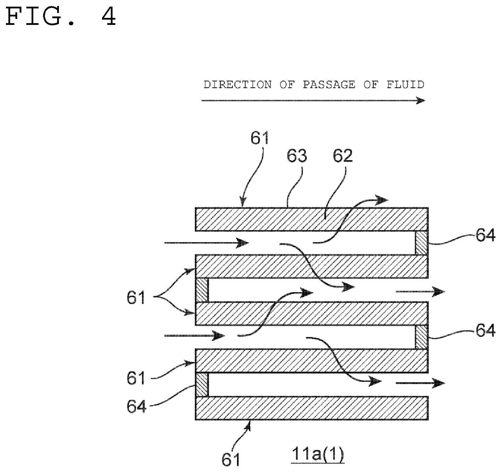

As illustrated in FIG. **4**, in one embodiment, the first adsorption block **11a** includes a plurality of adsorption material-containing portions **61**.

The adsorption material-containing portion **61** typically extends in the direction of passage of the fluid and has a thickness in the first orthogonal direction (up-and-down direction on the drawing sheet) orthogonal to the direction of passage of the fluid.

The plurality of adsorption material-containing portions **61** are stacked in a thickness direction thereof so as to be spaced apart from each other. In the illustrated example, five adsorption material-containing portions **61** are arranged in parallel. However, the number of adsorption material-containing portions **61** is not limited thereto. The number of adsorption material-containing portions **61** is, for example, 5 or more, preferably 10 or more, more preferably 20 or more. A distance between adjacent adsorption material-containing portions **61** among the plurality of adsorption material-containing portions **61** is, for example, from 0.5 cm to 1.5 cm.

Each of the plurality of adsorption material-containing portions **61** includes a flexible fiber member **63** and a plurality of pellet-like adsorption materials **62**.

The flexible fiber member **63** permits passage of a fluid and restricts passage of the pellet-like adsorption materials. The flexible fiber member **63** is typically formed in a hollow shape (bag shape) that allows the plurality of pellet-like adsorption materials **62** to be contained therein. The flexible fiber member **63** may be a fabric or a non-woven fabric. Examples of a material for the flexible fiber member **63** include organic fibers and natural fibers, preferably, a polyethylene terephthalate fiber, a polyethylene fiber, and a cellulosic fiber. A thickness of the flexible fiber member **63** is, for example, from 25 µm to 500 µm.

The plurality of pellet-like adsorption materials **62** are filled in the flexible fiber member **63** having a hollow shape (bag shape). The pellet-like adsorption material **62** serves as an acid gas adsorption material, and typically serves as a carbon dioxide adsorption material. Examples of a material for the pellet-like adsorption material **62** include a material modified with the above-mentioned acid gas adsorption material, preferably cellulose modified with the above-mentioned acid gas adsorption material, more preferably nanofibrillated cellulose modified with the above-mentioned acid gas adsorption material. A mean primary particle diameter of the pellet-like adsorption material **62** is, for example, from 60 µm to 1,200 µm. Any appropriate value may be used as a filling ratio of the pellet-like adsorption materials **62** in the adsorption material-containing portion **61**.

The acid gas adsorption device **1** of the illustrated example further includes a plurality of spacers **64**. The spacer **64** is located between adjacent adsorption material-containing portions **61** among the plurality of adsorption material-containing portions **61**. This configuration allows a distance between adjacent adsorption material layers among the adsorption material layers to be stably ensured. In one embodiment, the plurality of adsorption material-containing portions **61** and the plurality of spacers **64** are arranged in a substantially zig-zag pattern when viewed from the second orthogonal direction (depth direction on the drawing sheet of FIG. **1**) orthogonal to the thickness direction of the adsorption material-containing portions **61**.

As the first adsorption block **11a** (the acid gas adsorption part **1**) as described above, there is, for example, a gas separation unit as described in WO 2014/170184 A1. The publication is incorporated herein in its entirety by reference.

### B-1-2. Adsorption Block including Acid Gas Adsorption Material Layer (Acid Gas Adsorption Part)

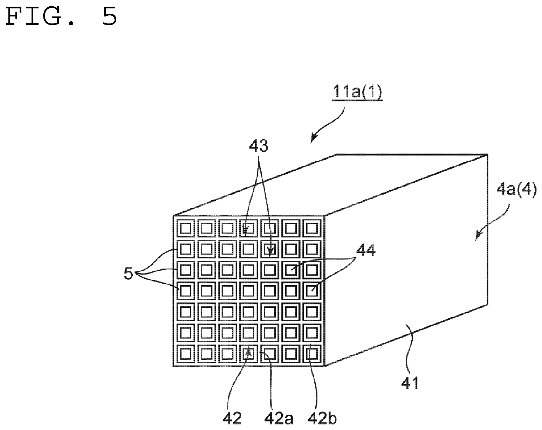

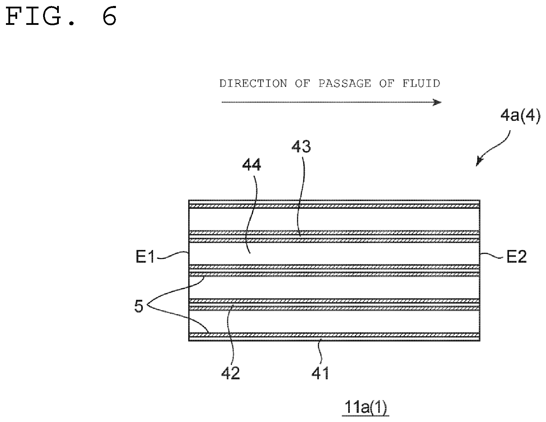

In another embodiment, as illustrated in FIG. **5** and FIG. **6**, the first adsorption block **11a** typically includes a base material **4** and acid gas adsorption material layers **5**.

The structure of the base material **4** is not particularly limited, and is, for example, a honeycomb-like structure, a filter structure such as a filtration cloth, or a pellet structure. The acid gas adsorption material layer **5** is not particularly limited as long as the layer is arranged on the surface of any such base material **4**.

In one embodiment, the base material **4** is a honeycomb-like base material **4a**. The honeycomb-like base material **4a** includes partition walls **42** that define a plurality of cells **43**.

The cells **43** each extend from a first end surface **E1** (inflow end surface) of the honeycomb-like base material **4a** to a second end surface **E2** (outflow end surface) thereof in the lengthwise direction (axial direction) of the honeycomb-like base material **4a** (see FIG. **6**). The cells **43** each have any appropriate shape in a cross section in a direction perpendicular to the lengthwise direction of the honeycomb-like base material **4a**. The sectional shapes of the cells are each, for example, a triangle, a quadrangle, a pentagon, a hexagon, a higher polygon, a circle, or an ellipse. The sectional shapes and sizes of the cells may be all the same, or may be at least partly different. Of such sectional shapes of the cells, for example, a hexagon or a quadrangle is preferred, and a square, a rectangle, or a hexagon is more preferred.

A cell density in a cross section in the direction perpendicular to the lengthwise direction of the honeycomb-like base material (specifically, the number of cells **43** per unit area) may be appropriately set in accordance with purposes. The cell density may be, for example, from 4 cells/cm² to 320 cells/cm². When the cell density falls within such range, the strength and effective geometric surface area (GSA) of the honeycomb-like base material can be sufficiently ensured.

The honeycomb-like base material **4a** has any appropriate shape (overall shape). The shape of the honeycomb-like base material is, for example, a cylinder with a circle as its bottom, an elliptic cylinder with an ellipse as its bottom, a prismatic column with a polygon as its bottom, or a column with an indefinite shape as its bottom. The honeycomb-like base material **4a** of the illustrated example has a prismatic columnar shape. The outer diameter and length of the honeycomb-like base material may be appropriately set in accordance with purposes. The honeycomb-like base material may have a hollow region in a center portion thereof in the cross section in the direction perpendicular to the lengthwise direction, though the hollow region is not shown.

The honeycomb-like base material **4a** typically includes: an outer wall **41**; and a partition wall **42** positioned inside the outer wall **41**. In the illustrated example, the outer wall **41** and the partition wall **42** are integrally formed. The outer wall **41** and the partition wall **42** may be separate bodies.

In the illustrated example, the outer wall **41** has a rectangular cylindrical shape. The thickness of the outer wall **41** may be set to any appropriate thickness. The thickness of the outer wall **41** is, for example, from 0.1 mm to 10 mm.

The partition wall **42** defines the plurality of cells **43**. More specifically, the partition wall **42** has a first partition wall **42a** and a second partition wall **42b** perpendicular to each other, and the first partition wall **42a** and the second partition wall **42b** define the plurality of cells **43**. The sectional shapes of the cells **43** are each a substantially quadrangular shape. The configuration of the partition wall is not limited to the partition wall **42** described above. The partition wall may have a first partition wall extending in a radial direction and a second partition wall extending in a circumferential direction, which define a plurality of cells.

The thickness of the partition wall **42** may be appropriately set in accordance with the applications of the acid gas adsorption device. The thickness of the partition wall **42** is typically smaller than the thickness of the outer wall **41**. The thickness of the partition wall **42** is, for example, from 0.03 mm to 0.6 mm. The thickness of the partition wall is measured, for example, through sectional observation with a scanning electron microscope (SEM). When the thickness of the partition wall falls within such range, the honeycomb-like base material can ensure sufficient mechanical strength, and can also ensure a sufficient opening area (total area of the cells in a cross section).

The porosity of the partition wall **42** may be appropriately set in accordance with purposes. The porosity of the partition wall **42** is, for example, from 15% to 70%, preferably from 20% to 45%. The porosity is measured, for example, by mercury porosimetry.

The bulk density of the partition wall **42** may be appropriately set in accordance with purposes. The bulk density is, for example, from 0.10 g/cm³ to 0.60 g/cm³, preferably from 0.20 g/cm³ to 0.50 g/cm³. The bulk density is measured, for example, by mercury porosimetry.

A material for forming the partition wall **42** is typically, for example, a ceramic. Examples of the ceramic include silicon carbide, a silicon-silicon carbide-based composite material, cordierite, mullite, alumina, silicon nitride, spinel, a silicon carbide-cordierite-based composite material, lithium aluminum silicate, and aluminum titanate. Those materials for forming the partition walls may be used alone or in combination thereof. Of those materials for forming the partition walls, for example, cordierite, alumina, mullite, silicon carbide, a silicon-silicon carbide-based composite material, and silicon nitride are preferred, and silicon carbide and a silicon-silicon carbide-based composite material are more preferred.

Such honeycomb-like base material **4a** is typically produced by the following method. First, a binder and water or an organic solvent are added to material powder including ceramic powder described above as required. The resultant mixture is kneaded to provide a body, and the body is molded (typically extruded) into a desired shape. After that, the body is dried, and is fired as required. Thus, the honeycomb-like base material **4a** is produced. When the firing is adopted, the body is fired at, for example, from 1,200°C to 1,500°C. A firing time period is, for example, from 1 hour to 20 hours.

In one embodiment, the acid gas adsorption material layer **5** is formed on the surface of the partition wall **42**. The thickness of the acid gas adsorption material layer **5** is not particularly limited. The thickness of the acid gas adsorption material layer **5** is, for example, from 10 µm to 1,000 µm, preferably from 50 µm to 500 µm, more preferably from 150 µm to 250 µm.

In the first adsorption block **11a**, a flow passage **44** is formed in a portion (typically, a center portion) in a cross section of the cell **43** in which the acid gas adsorption material layer **5** is not formed. The acid gas adsorption material layer **5** may be formed on the entire inner surface of the partition wall **42** (specifically, so as to surround the flow passage **44**) as in the illustrated example, or may be formed on part of the surface of the partition wall. When the acid gas adsorption material layer **5** is formed on the entire inner surface of the partition wall **42**, an improvement in acid gas (typically, CO₂) adsorption efficiency can be achieved.

The flow passage **44** extends from the first end surface **E1** (inflow end surface) to the second end surface **E2** (outflow end surface) as with the cells **43**. A direction in which the flow passage **44** extends and a direction of passage of the fluid are typically parallel to each other. Examples of the sectional shape of the flow passage **44** include the same sectional shapes as those of the cells **43** described above. Of those, for example, a hexagon or a quadrangle is preferred, and a square, a rectangle, or a hexagon is more preferred. The sectional shapes and sizes of the flow passage **44** may be all the same, or may be at least partly different.

The cells **43** (more specifically, the flow passages **44**) are each typically supplied with a gas to be treated containing an acid gas in the adsorption step to be described later, and are each supplied with a desorption gas in the desorption step to be described later.

The acid gas adsorption material layers **5** include the above-mentioned acid gas adsorption material. In one embodiment, the acid gas adsorption material layer **5** includes a porous carrier in addition to the above-mentioned acid gas adsorption material. In this case, the acid gas adsorption material is typically supported by the porous carrier to face the flow passage. When the acid gas adsorption material layer includes the porous carrier, the escape of the acid gas adsorption material from the acid gas adsorption material layer can be prevented in the adsorption step and/or the desorption step.

The porous carrier may form mesopores in the acid gas adsorption material layer. Examples of the porous carrier include: metal organic frameworks (MOF), such as MOF-74, MOF-200, and MOF-210; activated carbon; nitrogen-doped carbon; mesoporous silica; mesoporous alumina; zeolite; a carbon nanotube; and a fluorinated resin such as polyvinylidene fluoride (PVDF). Of those, for example, metal organic frameworks (MOF), activated carbon, PVDF, zeolite, mesoporous silica, and mesoporous alumina are preferred. Those porous carriers may be used alone or in combination thereof.

The BET specific surface area of the porous carrier is, for example, 50 m²/g or more, preferably 500 m²/g or more. When the surface area of the porous carrier is adjusted within such ranges, the acid gas adsorption material can be stably supported, and hence an improvement in acid gas adsorption efficiency can be achieved. The upper limit of the BET specific surface area of the porous carrier is typically 2,000 m²/g or less.

When the acid gas adsorption material layer includes the acid gas adsorption material and the porous carrier, the content ratio of the total of the acid gas adsorption material and the porous carrier in the acid gas adsorption material layer is, for example, 30 mass% or more, preferably 50 mass% or more. Meanwhile, the content ratio of the total of the acid gas adsorption material and the porous carrier is, for example, 100 mass% or less, preferably 99 mass% or less.

The content ratio of the acid gas adsorption material in the acid gas adsorption material layer is, for example, 30 mass% or more, preferably 50 mass% or more. Meanwhile, the content ratio of the acid gas adsorption material in the acid gas adsorption material layer is, for example, 99 mass% or less. The content ratio of the porous carrier is, for example, from 0.01 part by mass to 0.7 part by mass, preferably from 0.3 part by mass to 0.5 part by mass with respect to 1 part by mass of the acid gas adsorption material. When the content ratio of the porous carrier falls within such ranges, the acid gas adsorption material can be carried more stably.

Further, the acid gas adsorption material layer may be formed only of the acid gas adsorption material. In this case, the acid gas adsorption material is directly supported by the partition wall **42** to face the flow passage. When the acid gas adsorption material layer is formed only of the acid gas adsorption material, the content ratio of the acid gas adsorption material in the acid gas adsorption material layer is typically from 95.0 mass% to 100 mass%. When the content ratio of the acid gas adsorption material falls within such range, excellent acid gas adsorption efficiency can be stably ensured.

Such acid gas adsorption material layer is typically produced by the following method. A solution of the acid gas adsorption material is prepared by dissolving the above-mentioned acid gas adsorption material in a solvent. Further, the above-mentioned porous carrier is added to the solvent as required. The order of addition of the acid gas adsorption material and the porous carrier is not limited to any particular order. After that, the solution of the acid gas adsorption material is applied onto the base material (specifically, the partition walls), and the coating film is then dried, and is sintered as required. Thus, the acid gas adsorption material layer is formed.

### C. Adsorption Material Outflow Inhibition Part

As illustrated in FIG. **1**, the adsorption material outflow inhibition part **2** typically inhibits passage of a liquid containing the acid gas adsorption material (adsorption material-containing liquid) and allows passage of a fluid other than the adsorption material-containing liquid.

The dimension of the adsorption material outflow inhibition part **2** in the direction of passage of the fluid is, for example, from 0.01 m to 2 m, preferably from 0.1 m to 0.5 m. When the dimension of the adsorption material outflow inhibition part in the direction of passage of the fluid falls within such ranges, the passage of the adsorption material-containing liquid can be sufficiently inhibited.

The dimension of the adsorption material outflow inhibition part **2** in the direction orthogonal to the direction of passage of the fluid is not particularly limited, and is, for example, from 0.5 m to 4.0 m, preferably from 1.0 m to 2.0 m. In one embodiment, when viewed from the direction of passage of the fluid, the shape and size of the adsorption material outflow inhibition part **2** are substantially the same as the shape and size of the acid gas adsorption part **1**.

In the illustrated example, the adsorption material outflow inhibition part **2** is arranged at an interval from the downstream end surface **1b** of the acid gas adsorption part **1** so as to face the downstream end surface **1b**.

The dimension of the gap between the acid gas adsorption part **1** and the adsorption material outflow inhibition part **2** in the direction of passage of the fluid is, for example, from 0% to 50%, preferably from 5% to 20% with respect to the total length of the adsorption material outflow inhibition part in the direction of passage of the fluid. When such gap is formed between the acid gas adsorption part and the adsorption material outflow inhibition part, the adsorption material-containing liquid can be stably held in the gap.

Although not shown, the adsorption material outflow inhibition part **2** may be inclined upward in a vertical direction toward a downstream side in the direction of passage of the fluid. When the adsorption material outflow inhibition part is inclined as described above, the passage of the adsorption material-containing liquid through the adsorption material outflow inhibition part and the discharge thereof from the acid gas adsorption device can be stably inhibited. In particular, when a gap is formed between the acid gas adsorption part and the adsorption material outflow inhibition part, the adsorption material-containing liquid can be smoothly guided toward the gap.

The adsorption material outflow inhibition part **2** may be divided into a plurality of portions in the direction of passage of the fluid, and may also be divided into a plurality of blocks in a direction intersecting (typically orthogonal to) the direction of passage of the fluid.

As illustrated in FIG. **3**, in one embodiment, the adsorption material outflow inhibition part **2** is divided into a plurality of blocks in the direction intersecting (typically orthogonal to) the direction of passage of the fluid. The adsorption material outflow inhibition part **2** is formed of a plurality of inhibition blocks **2a**. Thus, inhibition blocks, each being relatively small, can be produced to form the adsorption material outflow inhibition part. Accordingly, the adsorption material outflow inhibition part can be smoothly produced, and a portion of the adsorption material outflow inhibition part that is particularly liable to deteriorate (inhibition block) can be separately replaced.

The size of the inhibition block **2a** may be adjusted to any appropriate size. The size range of the inhibition block **2a** is, for example, the same as the size range of the first adsorption block **11a** described above.

In the illustrated example, the adsorption material outflow inhibition part **2** is divided into four blocks in the first orthogonal direction (up-and-down direction on the drawing sheet) orthogonal to the direction of passage of the fluid. The number of divisions of the adsorption material outflow inhibition part **2** in the first orthogonal direction is not limited to the number described above. Further, the adsorption material outflow inhibition part **2** may also be divided into a plurality of blocks in the second orthogonal direction (depth direction on the drawing sheet) orthogonal to the direction of passage of the fluid and the first orthogonal direction. The number of divisions of the adsorption material outflow inhibition part **2** in the direction orthogonal to the direction of passage of the fluid is, for example, 2 or more and 300 or less.

The inhibition blocks **2a** adjacent to each other among the plurality of inhibition blocks **2a** may form a gap therebetween or may be in contact with each other in the direction orthogonal to the direction of passage of the fluid.

In addition, all of the plurality of inhibition blocks **2a** may include the same outflow inhibitor, or some of the plurality of inhibition blocks **2a** may include different outflow inhibitors.

The adsorption material outflow inhibition part **2** may be described in the same manner as in the acid gas adsorption part **1** described above except that the adsorption material outflow inhibition part **2** includes the outflow inhibitor instead of the acid gas adsorption material. In addition, the adsorption material outflow inhibition part illustrated in FIG. **1** (integrally formed) and the inhibition block illustrated in FIG. **3** have the same configuration except for a difference in size. Thus, the configuration of the inhibition block **2a** illustrated in FIG. **3** is described in detail below.

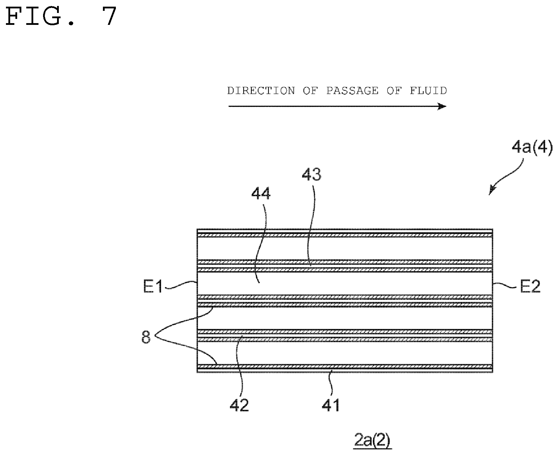

As illustrated in FIG. **7**, in one embodiment, the inhibition block **2a** includes the honeycomb-like base material **4a** described above and outflow inhibitor layers **8**.

In the illustrated example, the outflow inhibitor layer **8** is formed on the surface of the partition wall **42**. The thickness of the outflow inhibitor layer **8** is not particularly limited. In one embodiment, the thickness of the outflow inhibitor layer **8** is smaller than the thickness of the acid gas adsorption material layer **5**. The thickness of the outflow inhibitor layer **8** is, for example, from 0.5 µm to 800 µm, preferably from 1.5 µm to 500 µm, more preferably from 20 µm to 300 µm, still more preferably from 50 µm to 150 µm.

In the inhibition block **2a**, a flow passage **44** is formed in a portion (typically, a center portion) in a cross section of a cell **43** in which the outflow inhibitor layer **8** is not formed. The flow passage **44** of the inhibition block **2a** is described in the same manner as in the flow passage **44** of the first adsorption block **11a** described above. The outflow inhibitor layer **8** may be formed on the entire inner surface of the partition wall **42** (specifically, so as to surround the flow passage **44**) as in the illustrated example, or may be formed on part of the surface of the partition wall. When the outflow inhibitor layer **8** is formed on the entire inner surface of the partition wall **42**, the passage of the adsorption material-containing liquid through the adsorption material outflow inhibition part can be stably inhibited.

The outflow inhibitor layer **8** includes the above-mentioned outflow inhibitor.

The content ratio of the outflow inhibitor in the outflow inhibitor layer **8** is, for example, from 1 mass% to 100 mass%, preferably from 10 mass% to 50 mass%. When the content ratio of the outflow inhibitor in the outflow inhibitor layer falls within such ranges, the passage of the adsorption material-containing liquid through the adsorption material outflow inhibition part can be inhibited even more stably.

Such outflow inhibitor layer **8** is typically produced by the following method. A solution of the outflow inhibitor is prepared by dissolving the above-mentioned outflow inhibitor in a solvent. After that, the solution of the outflow inhibitor is applied onto the base material (specifically, the partition walls), and the coating film is then dried, and is sintered as required. Thus, the outflow inhibitor layer **8** is formed.

### D. Housing Part

As illustrated in FIG. **1**, in one embodiment, the acid gas adsorption device **100** includes a housing part **3** that houses the acid gas adsorption part **1** and the adsorption material outflow inhibition part **2**. The housing part **3** may be sometimes referred to as "case". In other words, one housing part **3** (case) houses the acid gas adsorption part **1** and the adsorption material outflow inhibition part **2** together. As compared to a case in which the acid gas adsorption part **1** and the adsorption material outflow inhibition part **2** are housed in different housing parts **3**, housing the acid gas adsorption part **1** and the adsorption material outflow inhibition part **2** together in one housing part **3** enables a reduction in size of the acid gas adsorption device. Thus, facility cost can be kept low. Further, the amount of capture of the acid gas per area can be increased.

In the illustrated example, the housing part **3** has a tubular shape extending in the direction of passage of the fluid. The housing part **3** has an inflow port **31** and an outflow port **32**.

The inflow port **31** is positioned in an upstream end portion of the housing part **3** in the direction of passage of the fluid. The inflow port **31** is positioned on the opposite side of the acid gas adsorption part **1** to the adsorption material outflow inhibition part **2**. The inflow port **31** allows passage of a gas to be treated in an adsorption step described later.

The outflow port **32** is positioned in a downstream end portion of the housing part **3** in the direction of passage of the fluid. The outflow port **32** is positioned on the opposite side of the adsorption material outflow inhibition part **2** to the acid gas adsorption part **1**. In the adsorption step, the outflow port **32** allows passage of a treated gas having passed through the acid gas adsorption part **1** and having a reduced acid gas concentration.

### E. Discharge Part

In one embodiment, the acid gas adsorption device **100** further includes a discharge part **7**. The discharge part **7** can discharge the adsorption material-containing liquid from the housing part **3**. With such configuration, the adsorption material-containing liquid that is retained inside the acid gas adsorption device can be smoothly discharged from the housing part. Thus, the influence on the adsorption performance of the acid gas adsorption part due to the retention of the adsorption material-containing liquid can be reduced. In addition, the adsorption material-containing liquid can be captured together, and hence the captured adsorption material-containing liquid can be appropriately treated. Thus, the influence of the acid gas adsorption material on the human body and/or the environment can be sufficiently suppressed even when the adsorption material-containing liquid is discharged from the housing part.

The discharge part **7** typically discharges the adsorption material-containing liquid through an opening formed in the housing part **3**. The opening is not shown, but is positioned on a downstream side from the acid gas adsorption part **1** in the direction of passage of the fluid. The opening is preferably in communication with the gap between the acid gas adsorption part **1** and the adsorption material outflow inhibition part **2.** As a result, the discharge part can smoothly discharge the adsorption material-containing liquid that is retained between the acid gas adsorption part and the adsorption material outflow inhibition part.

### F. Method of capturing Acid Gas

Next, a method of capturing an acid gas with use of the acid gas adsorption device according to one embodiment of the present disclosure is described. The method of capturing an acid gas typically includes the adsorption step and the desorption step.

In the adsorption step, a gas to be treated containing an acid gas is supplied to the acid gas adsorption part **1** adjusted to a predetermined adsorption temperature. When the gas to be treated is a CO₂-containing gas, the concentration of CO₂ in the CO₂-containing gas before being supplied to the acid gas adsorption device is, for example, from 100 ppm (based on a volume) to 2 vol%.

In the illustrated example, the gas to be treated containing an acid gas passes through the inflow port **31** of the housing part **3** to be supplied to the acid gas adsorption part **1**. Then, the gas to be treated containing an acid gas passes through the acid gas adsorption part **1** (typically, the flow passages **44** included in the acid gas adsorption part **1**). At this time, the acid gas adsorption material included in the acid gas adsorption part **1** adsorbs an acid gas (typically CO₂) from the gas to be treated that contains the acid gas. Accordingly, the acid gas is efficiently adsorbed from the gas to be treated that has been supplied to the acid gas adsorption part.

A temperature (adsorption temperature) of the acid gas adsorption part in the adsorption step is, for example, from 0°C to 50°C, preferably from 10°C to 40°C. In one embodiment, the adsorption temperature is equal to an outside air temperature. An operation time period of the adsorption step (adsorption time) is, for example, from 15 minutes to 3 hours, preferably from 30 minutes to 2 hours.

When the adsorption temperature and/or the adsorption time falls within the above-mentioned ranges, the acid gas adsorption material can efficiently adsorb the acid gas.

After that, the treated gas that has passed through the acid gas adsorption part passes through the adsorption material outflow inhibition part **2** (typically, the flow passages **44** included in the adsorption material outflow inhibition part **2**) and the outflow port **32** of the housing part **3** in the stated order and is discharged from the acid gas adsorption device **100**.

An acid gas adsorption rate in the adsorption step (=100-(concentration of the acid gas in the treated gas/concentration of the acid gas in the gas to be treated before being supplied to the acid gas adsorption part×100)) is, for example, 60% or more, preferably 75% or more, more preferably 80% or more. Meanwhile, the upper limit of the acid gas adsorption rate in the adsorption step is typically 90%.

In the desorption step, typically, a desorption gas heated to a desorption temperature exceeding the adsorption temperature is supplied to the acid gas adsorption part **1**.

The desorption gas may contain a condensable component. Examples of the condensable component include: water vapor; alcohols, such as methanol and ethanol; and carboxylic acids, such as formic acid and acetic acid.

The concentration of the condensable component in the desorption gas is, for example, from 0.1 vol% to 100 vol%, or for example, from 0.0001 vol% to 1 vol%.

Specific examples of the desorption gas include water vapor, CO₂, and an acid gas previously captured by the acid gas adsorption device (hereinafter referred to as "captured gas"). These desorption gases may be used alone or in combination thereof.

The desorption temperature is, for example, from 70°C to 200°C, preferably from 80°C to 110°C.

Such desorption gas transfers thermal energy to the acid gas adsorption part **1** when passing through the acid gas adsorption part **1** (typically, the flow passages **44** included in the acid gas adsorption part **1**). Thus, the temperature in the acid gas adsorption part **1** may decrease toward the downstream side in the direction of passage of the fluid (desorption gas). As a result, there is a risk in that, in a downstream side portion of the acid gas adsorption part **1**, the above-mentioned condensable component may be liquefied, and the acid gas adsorption material may be dissolved and/or dispersed in the condensable component in a liquid state, to thereby generate the adsorption material-containing liquid. In contrast, in one embodiment, the adsorption material outflow inhibition part **2** is arranged on the downstream side of the acid gas adsorption part **1**. Thus, even when the adsorption material-containing liquid is generated, the passage of the adsorption material-containing liquid together with the desorption gas through the adsorption material outflow inhibition part **2** and the discharge thereof from the acid gas adsorption device **100** can be inhibited.

When the upstream end portion of the acid gas adsorption part **1** is heated to the desorption temperature by the supply of the desorption gas described above, this state is maintained for a predetermined desorption time. This causes the acid gas adsorbed by the acid gas adsorption material in the adsorption step to be desorbed from the acid gas adsorption material. Thus, the desorbed acid gas can be captured together with the desorption gas. In the desorption step, the desorption gas and the decompression pump may be used in combination. For example, the desorbed acid gas may be sucked and captured together with the desorption gas with a decompression pump.

An operation time period of the desorption step (desorption time for which the upstream end portion of the acid gas adsorption part is maintained at the desorption temperature) is, for example, from 1 minute to 1 hour, preferably from 5 minutes to 30 minutes. When the desorption temperature and/or the desorption time falls within the above-mentioned ranges, the acid gas can be sufficiently desorbed from the acid gas adsorption material.

As described above, the acid gas can be efficiently captured while inhibiting unintentional discharge of the adsorption material-containing liquid. The adsorption step and the desorption step may be repeatedly performed in the stated order.

### Examples

The present disclosure is specifically described below by way of Examples and Comparative Examples, but the present disclosure is not limited by these Examples. A measurement method for each characteristic of a deterioration inhibitor to be used in each of Examples and Comparative Examples is as described below.

### <Example 1>

A body containing alumina, silica, and magnesia (i.e., cordierite) was extruded and then dried to prepare a honeycomb-like base material illustrated in FIG. **5**. The honeycomb-like base material had a square column shape. The length of one side of a bottom surface of the honeycomb-like base material was 120 mm. In addition, the length of the honeycomb-like base material was 100 mm. The honeycomb-like base material included: partition walls defining a plurality of cells; and outer peripheral walls surrounding the partition walls. The sectional shape of each of the cells was a square shape. The cell density in the honeycomb-like base material was 62 cells/cm², the thickness of each of the partition walls was 0.1 mm, and the porosity of each of the partition walls was 40%.

Next, piperazine serving as an acid gas adsorption material was dissolved in a solvent to prepare a piperazine solution. The Hildebrand solubility parameter (SP value) of the acid gas adsorption material is shown in Table 1.

After that, a porous carrier was added and mixed with the piperazine solution. Then, the piperazine solution containing the porous carrier was applied to partition walls of a honeycomb-like base material under normal temperature and normal pressure (23°C, 0.1 MPaA (absolute pressure)). After that, the coating film of the piperazine solution was dried to form an acid gas adsorption material layer containing piperazine and the porous carrier. The thickness of the acid gas adsorption material layer was 200 µm.

Accordingly, an acid gas adsorption part was obtained.

In addition, a honeycomb-like base material was prepared in the same manner as in the above. The honeycomb-like base material had the same configuration as that of the honeycomb-like base material of the acid gas adsorption part except for the length. The length of the honeycomb-like base material was 100 mm.

Next, polyvinyl fluoride (PVF) serving as an outflow inhibitor was dissolved in a solvent to prepare a PVF solution. The Hildebrand solubility parameter (SP value) of the outflow inhibitor is shown in Table 1.

Then, the PVF solution was applied to partition walls of the honeycomb-like base material under normal temperature and normal pressure (23°C, 0.1 MPaA (absolute pressure)). After that, the coating film of the PVF solution was dried to form a PVF-containing outflow inhibitor layer. The thickness of the outflow inhibitor layer was 100 µm.

Accordingly, an adsorption material outflow inhibition part was obtained.

In addition, a housing part (case) having a rectangular cylindrical shape was prepared. Then, as illustrated in FIG. 1, the acid gas adsorption part and the adsorption material outflow inhibition part were housed in the housing part (case).

As described above, an acid gas adsorption device was prepared.

### <Example 2>

An acid gas adsorption device was prepared in the same manner as in Example 1 except that piperazine serving as the acid gas adsorption material was changed to polyethylenimine (PEI).

### <Example 3>

An acid gas adsorption device was prepared in the same manner as in Example 2 except that PVF as the outflow inhibitor was changed to polyvinylidene fluoride (PVDF).

### <Example 4>

An acid gas adsorption device was prepared in the same manner as in Example 1 except that: piperazine serving as the acid gas adsorption material was changed to tetraethylenepentamine (TEPA); and PVF as the outflow inhibitor was changed to polytetrafluoroethylene (PTFE). However, the thickness of the outflow inhibitor layer was 1 µm or less.

### <Comparative Example 1>

An acid gas adsorption device was prepared in the same manner as in Example 1 except that PVF as the outflow inhibitor was changed to vinylidene chloride.

### <Evaluation of Outflow Inhibition of Acid Gas Adsorption Material>

After the housing part of the acid gas adsorption device obtained in each of Examples and Comparative Example was purged with nitrogen at 100°C, water vapor at 120°C was flowed through a gas flow passage of the acid gas adsorption device at a flow rate of 2 m/s, and the acid gas adsorption part and the adsorption material outflow inhibition part were heated to 100°C.

Under a state in which the acid gas adsorption part and the adsorption material outflow inhibition part reached 100°C, a discharged gas discharged from the acid gas adsorption device was captured. After that, the concentration of the acid gas adsorption material in the discharged gas was measured, and the outflow inhibition effect of the acid gas adsorption material was evaluated based on the following criteria. The results thereof are shown in Table 1.
A: The concentration of the acid gas adsorption material in the discharged gas was less than 5 ppm.
B: The concentration of the acid gas adsorption material in the discharged gas was 5 ppm or more and 60 ppm or less.
C: The concentration of the acid gas adsorption material in the discharged gas was more than 60 ppm.

**Table 1**

| No. | Acid gas adsorption material | | Outflow inhibitor | | SP value difference (cal/cm³)^{1/2} | Outflow inhibition effect of adsorption acid gas material |
|---|---|---|---|---|---|---|
| | Material | SP value (cal/cm³)^{1/2} | Material | SP value (cal/cm³)^{1/2} | | |
| Example 1 | Piperazine | 11.5 | Polyvinyl fluoride (PVF) | 10.4 | 1.1 | A |
| Example 2 | Polyethylenimine (PEI) | 11.9 | Polyvinyl fluoride (PVF) | 10.4 | 1.5 | A |
| Example 3 | Polyethylenimine (PEI) | 11.9 | Polyvinylidene fluoride (PVDF) | 9.8 | 2.1 | A |
| Example 4 | Tetraethylenepentamine (TEPA) | 10.4 | Polytetrafluoroethyl ene (PTFE) | 6.2 | 4.2 | B |
| Comparative Example 1 | Piperazine | 11.5 | Vinylidene chloride | 12.2 | 0.7 | C |

As is apparent from Table 1, it is understood that, when the absolute value of the difference between the Hildebrand solubility parameter of the acid gas adsorption material and the Hildebrand solubility parameter of the outflow inhibitor (SP value difference) is 1.0 (cal/cm³)^{1/2} or more at 25°C, unintentional discharge of the acid gas adsorption material from the acid gas adsorption device can be inhibited.

### Industrial Applicability

The acid gas adsorption device according to the embodiment of the present disclosure can be used for separation and capture of an acid gas, and particularly, can be suitably used for a Carbon dioxide Capture, Utilization and Storage (CCUS) cycle.

### Reference Signs List

- **1**: acid gas adsorption part

- **2**: adsorption material outflow inhibition part
- **100**: acid gas adsorption device

## Claims

1. An acid gas adsorption device, comprising:
an acid gas adsorption part, which includes an acid gas adsorption material capable of adsorbing an acid gas, and which allows passage of a fluid; and
an adsorption material outflow inhibition part, which is positioned on a downstream side of the acid gas adsorption part in a direction of passage of the fluid, and which includes an outflow inhibitor,
wherein an absolute value of a difference between a Hildebrand solubility parameter of the acid gas adsorption material and a Hildebrand solubility parameter of the outflow inhibitor is 1.0 (cal/cm³)^{1/2} or more at 25°C.

2. The acid gas adsorption device according to claim 1, wherein the acid gas is carbon dioxide.

3. The acid gas adsorption device according to claim 1 or 2, wherein the outflow inhibitor has a solubility in water at 25°C of 0.1 g/100 g-H₂O or less.
